# EUROPEAN PATENT APPLICATION

(11) **EP 4 098 391 A1**
(43) Date of publication of application: **07.12.2022**
(21) Application number: 21425029.2
(22) Date of filing: 04.06.2021
(51) Int. Cl.: B23K 26/08, B23K 26/21, B23K 26/38, B23K 28/02, B23K 37/04, B23K 37/047, B23K 101/18

(54) **APPARATUS FOR PRODUCING LATERAL WALLS OF RAILWAY CARS**

(71) Applicant: Castellini Officine Meccaniche S.r.l., 25046 Cazzago San Martino (BS) (IT)
(72) Inventor: Filippini, Piermarcello, 25038 Rovato, Brescia (IT)
(74) Representative: Gualeni, Nadia

(57) **Abstract**

An apparatus (12) for producing lateral walls (14) of railway cars comprises: a machining unit (16) used for cutting and welding metal sheets (18, 20), comprising a laser cutting head (22) and a welding head (24) that are suitable for being moved along a substantially transverse direction; and a first support structure (26) suitable for supporting plates (18, 20) entering said machining unit (16); and a second support structure (28) suitable for supporting plates (18, 20) exiting said machining unit (16). The first support structure (26) comprises a first fixed structure (36) and a first movable structure (38) that is suitable for supporting a plate (18, 20) and suitable for being moved with respect to the first fixed structure (36) so as to protrude inside the machining unit (16). The second support structure (28) comprises a second fixed structure (40) and a second movable structure (42) that is suitable for supporting a plate (18, 20) and suitable for being moved with respect to the second fixed structure (40) so as to protrude inside the machining unit. The machining unit (16) is suitable for welding and cutting plates (18, 20) in the zone between said first movable structure (38) and said second movable structure (42). [Fig. 1]

## Description

### FIELD OF APPLICATION

This invention relates to an apparatus for producing lateral walls of railway cars.

### PRIOR ART

As is known, one process for producing lateral walls of railway cars involves using sheet metal plates which are welded together and in which the openings for windows or doors are then made.

The sheet metal plates are welded along a transverse direction which, in use, extends along the height of the car, while the length of the car is defined as the sum of the lengths of a plurality of sheet metal plates welded together.

The openings may be made once the sheet metal plates have been welded, such that openings which extend across two sheet metal plates may be made continuously.

The lateral walls produced in this way, which have optionally been subjected to further intermediate steps, are provided on a support frame to form the lateral wall of the car.

One of the main problems which known apparatuses face is the difficulty in carrying out cutting operations in order to produce the openings. In this step of the process, using laser cutting technology, it is necessary to provide disposable support surfaces that have to be periodically replaced.

### DISCLOSURE OF THE INVENTION

There is therefore a need to at least partially resolve the disadvantages and limitations mentioned with reference to the prior art.

There is therefore a need to provide an apparatus for producing lateral walls of railway cars that makes it possible, in particular, to overcome the disadvantages relating to the damage and replacement of the support surfaces for the plates during the cutting phases.

Moreover, there is a need for an apparatus which makes it possible to carry out the cutting phases without producing machining residues from the support surfaces for the plates during the cutting phases, which residues might compromise the cutting operation itself.

There is also a need for an apparatus which makes it possible to completely automate the cutting and welding phases without the continuous supervision of an operator.

These needs are satisfied at least in part by an apparatus for producing lateral walls of railway cars according to claim 1.

### DESCRIPTION OF THE DRAWINGS

Further features and advantages of this invention will become clearer from the following detailed description of preferred non-limiting embodiments thereof, in which:
- Fig. 1 is a schematic perspective view of an apparatus for producing lateral walls of railway cars according to one embodiment of this invention;
- Fig. 2 is a schematic plan view from above of an apparatus for producing lateral walls of railway cars according to one embodiment of this invention;
- Fig. 3 and 4 are schematic views of two operating phases of an apparatus for producing lateral walls of railway cars according to one embodiment of this invention, with some components removed for the sake of clarity;
- Fig. 5 and 6 are schematic views of the inlet portion and the outlet portion of an apparatus for producing lateral walls of railway cars according to one embodiment of this invention;
- Fig. 7 and 8 are schematic enlarged views of the portions of an apparatus for producing lateral walls of railway cars according to one embodiment of this invention, in two operating phases;
- Fig. 9 is a schematic lateral view of a portion of an apparatus for producing lateral walls of railway cars during an operating phase;
- Fig. 10 is a schematic perspective view of a portion of an apparatus for producing lateral walls of railway cars during an operating phase;
- Fig. 11 and 12 are two schematic perspective views of an apparatus for producing lateral walls of railway cars during two separate operating phases.

Elements or parts of elements common to the embodiments described in the following will be provided with the same reference signs.

### DETAILED DESCRIPTION

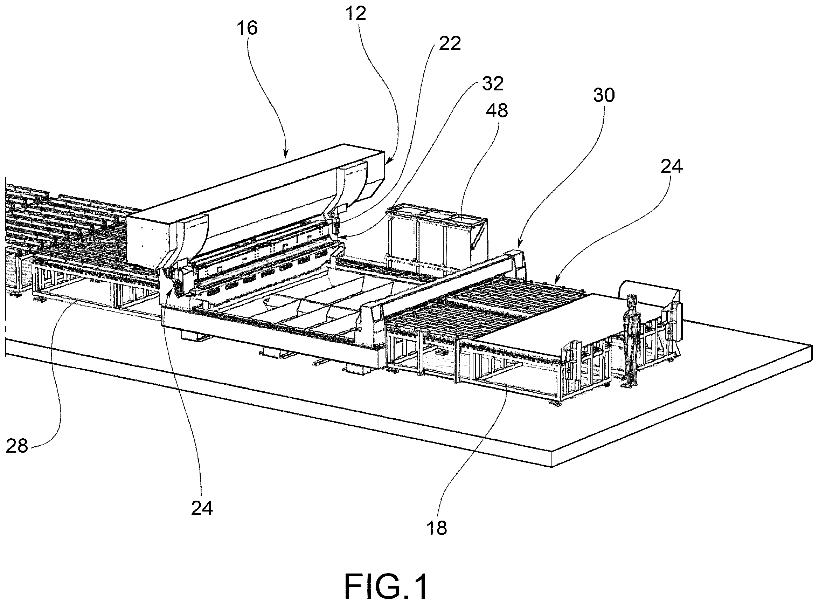

In Fig. 1, reference sign 12 indicates, as a whole, an apparatus for producing lateral walls 14 of railway cars.

The apparatus comprises a machining unit 16 used for cutting and welding metal sheets 18, 20, a first support structure 26 suitable for supporting plates 18, 20 entering said machining unit 16, and a second support structure 28 suitable for supporting plates 18, 20 exiting said machining unit 16.

In the present discussion, reference is made to a longitudinal direction (x) which is intended to mean the direction in which the plates move, and a transverse direction (y) which is intended to mean the direction perpendicular to the longitudinal direction.

The machining unit 16 comprises a laser cutting head 22 and a welding head 24 that are adapted for being moved along a substantially transverse direction.

According to a possible embodiment, the laser cutting head 22 and the welding head 24 may be provided on one single unit and may therefore be suitable for being moved in the substantially transverse direction together.

In a further embodiment, the machining unit 16 may comprise a plurality of laser cutting heads 22 and/or a plurality of welding heads 24. For example, the machining unit 16 may comprise a laser cutting head 22 that is intended to carry out only the edging of the plates 18, 20, and a laser cutting head 22 that is intended to produce the openings.

The first support structure 26 comprises a first fixed structure 36 and a first movable structure 38 that is adapted for supporting a plate 18, 20 and adapted for being moved with respect to the first fixed structure 36 so as to protrude inside the machining unit 16.

Similarly, the second support structure 28 comprises a second fixed structure 40 and a second movable structure 42 that is suitable for supporting a plate 18, 20 and suitable for being moved with respect to the second fixed structure 40 so as to protrude inside the machining unit.

The machining unit 16 is suitable for welding and cutting plates 18, 20 in the zone between the first movable structure 38 and the second movable structure 42.

In particular, the machining unit 16 is adapted for producing at least partial openings 50.

In this discussion, an at least partial opening 50 is intended to mean an opening produced in at least one plate 18, 20, wherein the opening may be complete, i.e. with material removed, or partial in the sense that partial cutting profiles may be produced while keeping the micro-junctions between the limbs such that the surface inside the cut is not removed but may be easily removed at a later time. Producing a partial opening is advantageous, since it allows the plates that form the wall and therefore the wall itself to maintain a certain rigidity that facilitates its transportation.

The machining unit 16 may comprise a first sheet metal press 30 which is associated with the first support structure 26 and suitable for securing a plate 18, 20 in position during a trimming and/or welding operation, and a second sheet metal press 32 which is associated with the second support structure 28 and suitable for securing a plate 18, 20 in position during a trimming and/or welding operation.

According to one possible embodiment, the first sheet metal press 30 and/or the second sheet metal press 32 are adapted for being moved in a longitudinal direction.

The movement of the first and second sheet metal presses 30, 32 may advantageously be associated with the first and second movable structures 38, 42, respectively.

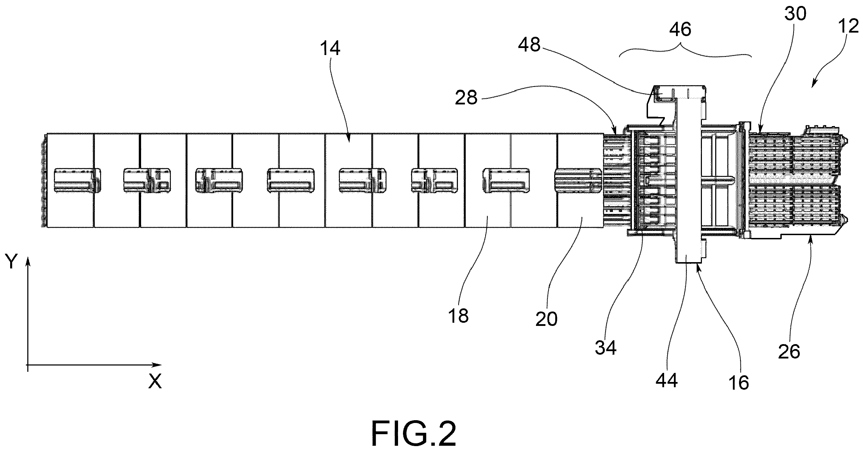

Moreover, the machining unit 16 comprises a fixed sheet metal press 34 suitable for securing the plates 18, 20 during the cutting operation for producing an at least partial opening. For example, the embodiment shown in Fig. 2 shows a fixed sheet metal press 34.

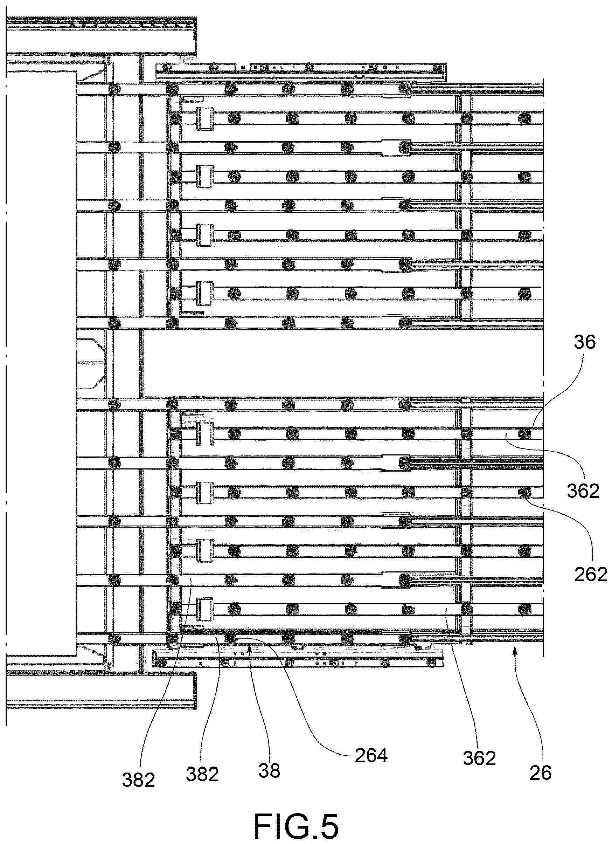

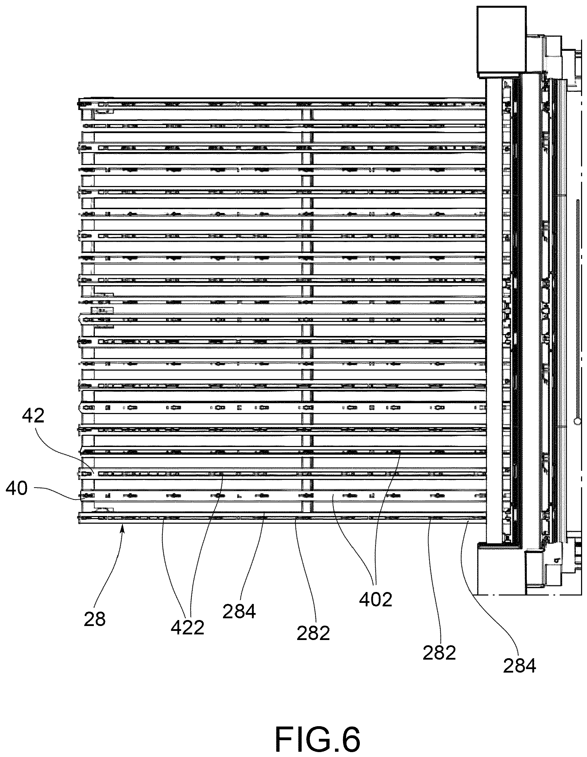

With particular reference to Fig. 5 and 6, the first fixed structure 36 and the second fixed structure 40 may comprise fixed beams 362, 402 that are parallel to and spaced apart from one another and arranged along a substantially longitudinal direction.

The first movable structure 38 and the second movable structure 42 may comprise movable beams 382, 422 that are parallel to and spaced apart from one another and arranged along a substantially longitudinal direction, which movable beams may be arranged in an alternating manner with respect to said fixed beams 362, 402.

Both the first support structure 26 and the second support structure 28 are therefore provided with a movable part that may be moved inside the machining unit 16 and in particular inside a machining region 46.

A first advantage is this solution is, for example, the possibility of moving the edges of the plates toward one another in order to be welded together. In fact, it is possible to slide the plates with respect to the fixed structure by means of the movable structures, while keeping the support for the plates substantially unchanged.

A second advantage arises during the cutting phase for producing at least partial openings 50. In fact, it is possible to ensure that there is no supporting surface below the zone where the cut is taking place, both during the production of the transverse cuts and during the production of cuts in different directions, as a result of it being possible to move the movable structures along the longitudinal direction.

In other words, the movable structures 38, 42 may be moved with respect to the plate 18, 20 that is secured in position by the fixed sheet metal press 34 such that the cut is made in a portion of the plate 18, 20 that is between the first movable structure 38 and the second movable structure 42.

The movable structures 38, 42 may be moved in a manner known per se, for example by means of brushless motors.

As will be discussed in the following, the movement of the movable structures 38, 42 may advantageously be interpolated with the movement of the laser cutting head and/or with the welding head.

As may be seen in Fig. 6, the second support structure 28 may be provided with sliding wheels 282, 284.

At least some of the sliding wheels 282, 284 may advantageously be motorized so as to allow the plates 18, 20 to slide in a longitudinal direction on demand.

In particular, with reference to Fig. 6, the movable beams 422 and the fixed beams 402 may be provided with sliding wheels 282, 284. In this way, during the movement of a plate 18, 20 by means of the second movable structure 42, the plate 18, 20 may slide onto the second fixed structure 40.

Similarly, once the fixed sheet metal press 34 comes into operation in order to secure a plate 18, 20, the second movable structure 42 and similarly the first movable structure 38 may slide below the secured plate so as to guarantee a spacing between the movable structures 38, 42, in which spacing the cut for producing the at least partial opening 50 may be made.

As may be seen in Fig. 5, the first support structure 26 may be provided with sliding balls 262, 264.

In particular, with reference to Fig. 5, the first movable structure 38 and the first fixed structure 36 may be provided with sliding balls 262, 264. In this way, during the movement of a plate 18, 20 by means of the first movable structure 38, the plate 18, 20 may slide onto the first fixed structure 36.

Moreover, the sliding balls 262, 264 allow the plates 18, 20 to move in a transverse direction on the first support structure 26.

According to one possible embodiment, the first sheet metal press 30 may be suitable for interacting with the first movable structure 38 in order to secure a plate 18, 20 in proximity to a first edge 182, 202 thereof. In much the same way, the second sheet metal press 32 may be suitable for interacting with the second movable structure 42 in order to secure a plate 18, 20 in proximity to a second edge 184, 204 thereof.

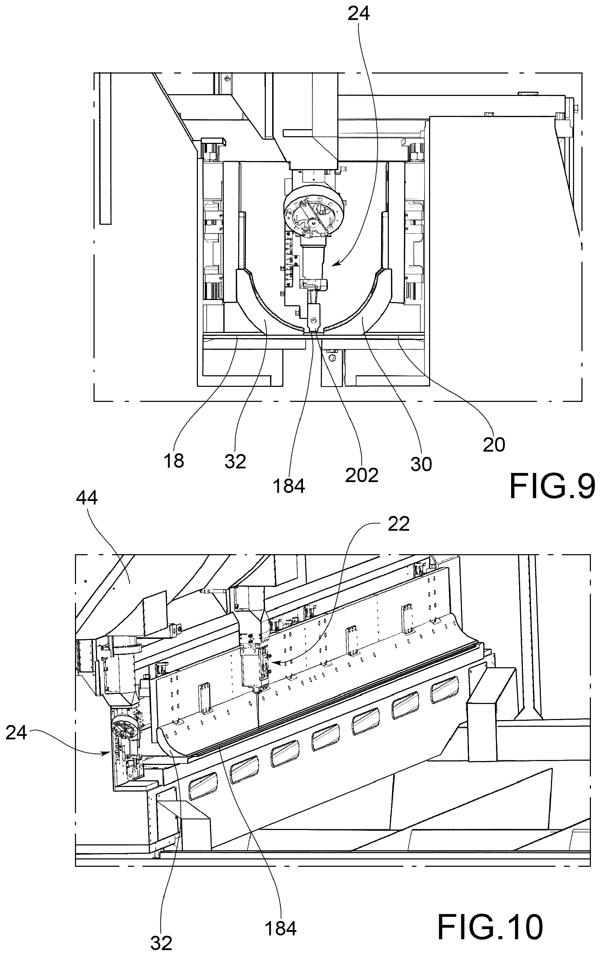

In this regard, Fig. 9 and 10 show two examples of operating phases in which the first and the second sheet metal presses 30, 32 may be used. In particular, Fig. 10 shows an operating phase in which an edge 184 of a first plate 18 is trimmed by means of the laser cutting head 22, the plate being held in position by means of the second sheet metal press 32. The same operating phase may be carried out by means of the laser cutting head 22 in order to trim an edge 202 of a second plate 20, the plate being held in position by means of the first sheet metal press 30.

Fig. 9 is a schematic view of a welding phase between two plates 18, 20 between the adjacent edges 184, 202 thereof, by means of a welding head 24. In this case, the first sheet metal press 30 and the second sheet metal press 32 act on the second plate 20 and on the first plate 18, respectively.

With reference to Fig, 2, the machining unit 16 may comprise a bridge structure 44 suitable for being moved in the longitudinal direction above a machining region 46. As may be seen in Fig. 10, the laser cutting head 22 and the welding head 24 are provided on the bridge structure 44.

According to one possible embodiment, the welding head 24 may be a laser welding head. According to an alternative possible embodiment, the welding head 24 may be an induction welding head.

The apparatus may comprise a programmable control unit 48 that is operatively connected to the first and second sheet metal presses 18, 20, to the machining unit, to the first movable structure 38 and to the second movable structure 42.

According to one possible embodiment, during the cutting operation to produce an at least partial opening 50, in at least one of the plates 18, 20, the programmable control unit 48 is programmed to make the cut in portions of the plates 18, 20 provided between the first movable structure 38 and the second movable structure 42.

In other words, during the cutting operation to produce an at least partial opening 50, the first movable structure 38 and the second movable structure 42 are spaced apart in the longitudinal direction such that the cutting operation takes place in a portion of at least one plate 18, 20 between the first movable structure 38 and the second movable structure 42.

A possible method for producing lateral walls of railway cars will now be briefly described. The method is given by way of example, and some steps may optionally not be present, may be different, or there may be steps present that are not described.

For example, the method may provide an initial step in which an operator manually loads a plate onto the first support structure 26. This step may optionally be carried out by means of an automated handling device, which may optionally be operatively connected to the programmable control unit.

The first metal sheet is then abutted against the first sheet metal press 30.

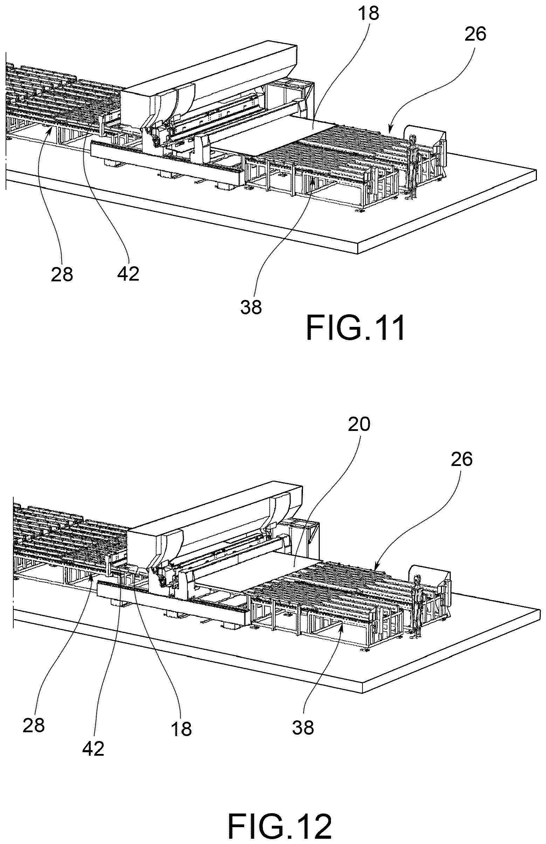

As may be seen for example in Fig. 11, the first sheet metal press 30 and the first movable structure 38 carry the first plate 18 forward such that it may be transferred to the second movable structure 42.

With reference to Fig. 12, a second metal sheet 20 is provided on the first support structure 26, which second plate is abutted against the first sheet metal press 30.

The first metal sheet 18, once it has been gripped by the second sheet metal press and protrudes from the second movable structure 42, is then subjected to a trimming operation by means of the laser cutting head 22.

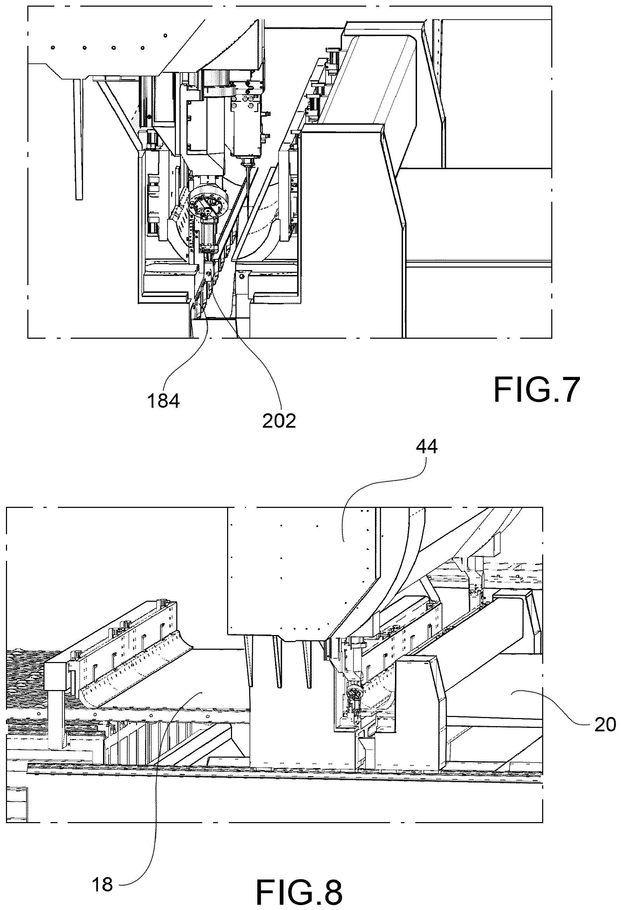

At this point, by means of the movable structures 38, 42, the two plates are moved toward one another, and the second plate 20 may be trimmed in a manner similar to the first plate 18 (see in this regard Fig. 7).

Once the edges have been trimmed, the first and second plates 18, 20 are also moved toward one another for the operating phase of welding by means of the welding head 24, as may be seen in the examples in Fig. 8 and 9.

In this case as well, the welding step takes place on portions of the plates 18, 20 that overhang with respect to the respective movable support structures.

Once the welding operation has been carried out, the welded plates 18, 20 which at least partially make up a wall 14 may be gripped by the fixed sheet metal press 34 and subjected to the operating phase of producing an at least partial opening 50.

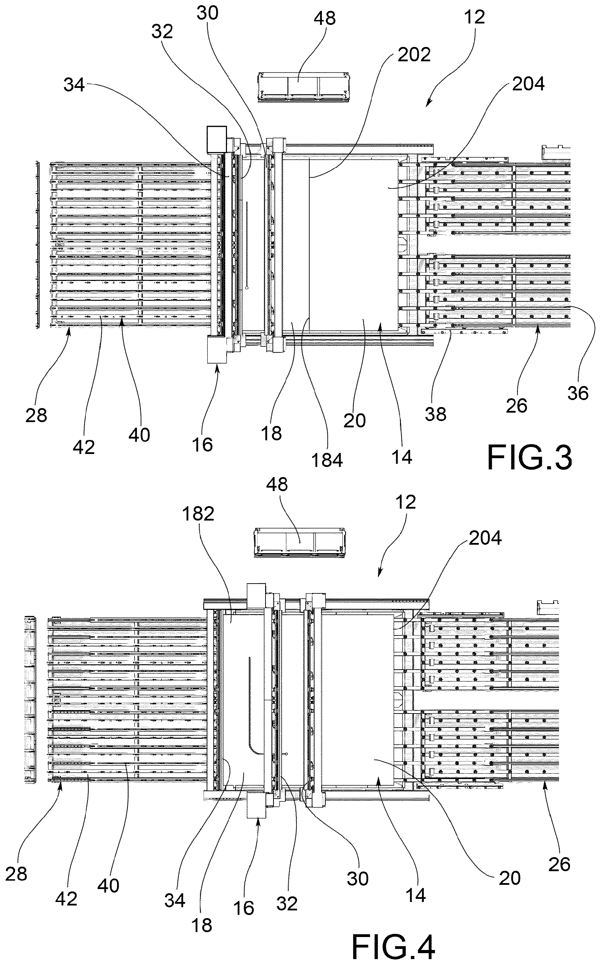

As may be seen in Fig. 3 and 4, the cutting may be done in a plurality of directions, as a result of the interpolation of the movements of the bridge structure 44, of the laser cutting head 22 on the bridge structure itself, and as a result of the movement of the first movable structure 38 and of the second movable structure 42.

Once the at least partial opening 50 has been made, the portion of the wall 14 may move forward and a new plate may be provided in order to be welded to the wall portion that has already been produced.

The advantages that may be achieved by using the apparatus of this invention are now clear.

Firstly, an apparatus has been provided which makes it possible to resolve the problems relating to providing disposable support structures for the plates.

Moreover, an apparatus has been provided which makes it possible to eliminate all of the machining residues relating to the support structures, which residues might have compromised any successive machining operations.

A person skilled in the art will be able to make modifications to the embodiments described above or substitute described elements with equivalent elements, in order to satisfy particular requirements, without departing from the scope of the accompanying claims.

In particular, the apparatus of this invention may optionally also be used in fields other than that of the railway sector, for example in order to produce prefabricated structures in general, aircraft fuselages, building facades or ships.

## Claims

1. Apparatus (12) for producing lateral walls (14) of railway cars, comprising:
a machining unit (16) used for cutting and welding metal sheets (18, 20), comprising a laser cutting head (22) and a welding head (24) that are adapted for being moved along a substantially transverse direction; and
a first support structure (26) adapted for supporting plates (18, 20) entering said machining unit (16); a second support structure (28) adapted for supporting plates (18, 20) exiting said machining unit (16);
said first support structure (26) comprising a first fixed structure (36) and a first movable structure (38) that is adapted for supporting a plate (18, 20) and adapted for being moved with respect to the first fixed structure (36) so as to protrude inside the machining unit (16);
said second support structure (28) comprising a second fixed structure (40) and a second movable structure (42) that is adapted for supporting a plate (18, 20) and adapted for being moved with respect to the second fixed structure (40) so as to protrude inside the machining unit;
said machining unit (16) being adapted for welding and cutting plates (18, 20) in the zone between said first movable structure (38) and said second movable structure (42).

2. Apparatus (12) according to claim 1, **characterized in that** said machining unit (16) comprises a first sheet metal press (30) which is associated with said first support structure (26) and suitable for securing a plate (18, 20) in position during a trimming and/or welding operation, and a second sheet metal press (32) which is associated with said second support structure (28) and suitable for securing a plate (18, 20) in position during a trimming and/or welding operation.

3. Apparatus (12) according to either claim 1 or claim 2, **characterized in that** said first sheet metal press (30) and said second sheet metal press (32) are suitable for being moved in a longitudinal direction.

4. Apparatus (12) according to any of claims 1 to 3, **characterized in that** said machining unit (16) comprises a fixed sheet metal press (34) suitable for securing said plates (18, 20) during the cutting operation for producing an at least partial opening (50).

5. Apparatus (12) according to any of claims 1 to 4, **characterized in that** said first fixed structure (36) and said second fixed structure (40) comprise fixed beams (362, 402) that are parallel to and spaced apart from one another and arranged along a substantially longitudinal direction.

6. Apparatus (12) according to claim 5, **characterized in that** said first movable structure (38) and said second movable structure (42) comprise movable beams (382, 422) that are parallel to and spaced apart from one another and arranged along a substantially transverse direction in an alternating manner with respect to said fixed beams (362, 402).

7. Apparatus (12) according to any of claims 1 to 6, **characterized in that** said second support structure (28) is provided with sliding wheels (282, 284).

8. Apparatus (12) according to claim 7, **characterized in that** at least some of said sliding wheels (282, 284) are motorized so as to allow the plates to slide in a longitudinal direction on demand.

9. Apparatus (12) according to any of claims 2 to 8, **characterized in that** said first sheet metal press (30) is suitable for interacting with said first movable structure (38) in order to secure a plate (18, 20) in the proximity of a first edge (182, 202) thereof.

10. Apparatus (12) according to any of claims 2 to 9, **characterized in that** said second sheet metal press (32) is suitable for interacting with said second movable structure (42) in order to secure a plate (18, 20) in the proximity of a second edge (184, 204) thereof.

11. Apparatus (12) according to any of claims 1 to 10, **characterized in that** said machining unit (16) comprises a bridge structure (44) suitable for being moved in the longitudinal direction above a machining region (46); said cutting head (22) and said welding head (24) being provided on said bridge structure (44).

12. Apparatus (12) according to any of claims 1 to 11, **characterized in that** said welding head (24) is a laser welding head.

13. Apparatus (12) according to any of claims 1 to 12, **characterized in that** it comprises a programmable control unit (48) that is operatively connected to said first and second sheet metal presses (18, 20), to said machining unit, and to said first movable structure (38) and to said second movable structure (42).

14. Apparatus (12) according to claim 13, **characterized in that**, during the cutting operation (100) to produce an at least partial opening (50), in at least one of said plates (18, 20), said programmable control unit (48) is programmed to make the cut in portions of the plates (18, 20) provided between said first movable structure (38) and said second movable structure (42).

15. Apparatus (12) according to any of claims 1 to 14, **characterized in that**, during the cutting operation to produce an at least partial opening (50), in at least one of said plates (18, 20), said first movable structure (38) and said second movable structure (42) are spaced apart in the longitudinal direction, said cutting operation taking place in a portion of at least one plate (18, 20) between the first movable structure (38) and the second movable structure (42).
